# EUROPEAN PATENT APPLICATION

(11) **EP 3 702 681 A1**
(43) Date of publication of application: **02.09.2020**
(21) Application number: 19159492.8
(22) Date of filing: 26.02.2019
(51) Int. Cl.: F24C 15/00, F24C 15/32, F16K 1/226, F16K 27/02

(54) **OVEN FOR COOKING FOODSTUFF**

(71) Applicant: Electrolux Professional S.p.A., 33170 Pordenone (IT)
(72) Inventor: PELLICCIA, Davide, 33170 Pordenone (IT); MORASSUT, Alessandro, 33170 Pordenone (IT)
(74) Representative: AWA Sweden AB

(57) **Abstract**

The oven **(1)** according to the invention, for cooking foodstuffs comprises a cooking chamber **(2)** configured for containing foodstuff to be cooked, a ventilation duct **(21)** configured for taking external air into the cooking chamber **(2),** and a controlled ventilation valve **(22),** associated to or comprised in the ventilation duct **(21)** for adjusting the flow or air through the latter. The controlled ventilation valve **(22)** comprises: A) a valve body **(50)** forming a valve duct **(52)** comprised in or fluidly connected to the ventilation duct **(21);** and B) a closure flap **(54)** configured for rotating around a predetermined rotation axis **(AR)** within said valve duct **(52),** so as to at least partially open and close said valve duct **(52)** and adjust the flow of air flowing in said ventilation duct **(21).**

## Description

The present invention relates to a cooking oven comprising a cooking chamber configured for containing foodstuff to be cooked, a ventilation duct configured for taking external air into the cooking chamber and a controlled ventilation valve arranged in the ventilation duct for controlling the humidity in the cooking chamber.

Such oven is particularly suited to be a "professional" oven, i.e. to be used mainly in professional activities such as restaurants, canteens, hotels, etc.

For enhancing cooking results, it is known providing ovens for cooking foods with systems for controlling the amount of humidity in the cooking chamber of the ovens.

Known humidity control systems comprise an outlet duct for ejecting steam from the cooking chamber in the outer ambient; the humidity level in the cooking chamber can be adjusted opening or closing a valve suitably arranged along the outlet duct.

The applicant noted that the cooking processes could be still further enhanced controlling the amount of humidity in the cooking chamber more precisely, with a prompter response and allowing it to vary more broadly.

An aim of the invention is therefore to provide an oven for cooking foodstuffs able to control the amount of humidity in the cooking chamber more precisely and quickly so as to enhance the cooking process.

The applicant found that this aim can be achieved providing a cooking oven with a ventilation duct configured for taking external air into the cooking chamber, and a controlled ventilation valve associated to or comprised in the ventilation duct for adjusting the flow or air through the latter, wherein the controlled ventilation valve comprises:
- a valve body forming a valve duct comprised in or fluidly connected to the ventilation duct; and
- a closure flap configured for rotating around a predetermined rotation axis within said valve duct, so as to at least partially open and close the latter and adjust the flow of air flowing in the ventilation duct.

The controlled ventilation valve allows fresh and dry external air be taken in the cooking chamber very quickly, controlling the amount thereof with great precision, and consequently varying the amount of humidity in the cooking chamber with similar precision an promptness, in particular when the humidity in the cooking chamber needs to be decreased.

Advantageously the oven comprises a heating chamber containing, at least partially, a heating device and, preferably, a fan.

The heating chamber can be separated from the cooking chamber by a perforated suction wall.

The oven is advantageously provided with a fan configured for circulating heated air through the cooking chamber and the heating chamber.

Advantageously the fan can be at least partially contained in the heating chamber. Preferably, the ventilation duct comprises an outlet provided at the heating chamber.

In an advantageous embodiment of the oven, the controlled ventilation valve is a butterfly valve: this kind of valve allows keeping head losses very low along the ventilation duct, in particular when the controlled ventilation valve is fully open, allowing the size of the ventilation duct cross-sections to be reduced, which leaves more space free for other electrical or mechanical parts to be housed in the oven, and therefore allows a great designing freedom and/or allows to keep the overall dimensions of the oven small.

In an advantageous embodiment, the oven further comprises a humidity control system configured for controlling the amount of humidity in the cooking chamber, wherein said humidity control system comprises:
- at least one humidity detector configured for detecting the amount of humidity in the cooking chamber when the oven operates;
- a logic unit controlling the position of the closure flap based on the detections of the at least one humidity detector.

In an advantageous embodiment of the oven, the valve body comprises at least two valve body parts, fixed one another, with said closure flap pivotably positioned therebetween: as it will appear more evident hereinafter, this arrangement contributes to reduce the number of parts of the controlled ventilation valve, in particular the number of gaskets, at the same time simplifying the assembling process of the valve.

In an advantageous embodiment of the oven, the valve body comprises two valve body parts, the shapes of which are identical or substantially identical one another: this measure allows, for example, to obtain both the valve body parts with a same mould, which contributes to reduce the tooling investments for manufacturing the controlled ventilation valve; in particular the investments for the moulds for producing the valve body are reduced, and the purchase, handling and management of parts in the manufacturing plant is greatly simplified.

In an advantageous embodiment of the oven, said two valve body parts are preferably arranged, when assembled one to another, substantially symmetrically or mirror-like one to another relative to an ideal reflection plane, said ideal reflection plane being arranged between said two valve body parts.

In an advantageous embodiment of the oven, said two valve body parts are arranged symmetrically one to another relative to an ideal reflection plane, when assembled one to another, in such a way that one of the two valve body parts coincide with the other of the two valve body parts rotated by **180°** around an axis lying in said ideal reflection plane.

In an advantageous embodiment of the oven, said two valve body parts are arranged, when assembled one to another, substantially symmetrically one to another relative to the rotation axis of the valve flap in such a way that one of the two valve body parts coincides with the other valve body part if ideally rotated by **180°** around said rotation axis.

The last three advantageous embodiments allow the controlled ventilation valve to be assembled through a simpler process.

In an advantageous embodiment of the oven, the valve body comprises two valve body parts, the shape of which allows each valve body to be moulded in one and the same moulding cavity of a mould, so as to reduce the tooling investments for moulding the valve, in particular the valve body parts, and, preferably, other parts such as the intermediate gaskets described hereinafter.

In an advantageous embodiment of the oven, said ideal reflection plane is preferably perpendicular or transversal to the longitudinal axis of said valve duct.

In an advantageous embodiment of the oven, at least a part of the valve body forms a substantially tubular portion forming at least part of the valve duct.

In an advantageous embodiment of the oven, the controlled ventilation valve comprises a motor for driving the closure flap, causing the flap to rotate so as to at least partially open and at least partially close the valve duct.

Advantageously the motor, or more generally the controlled ventilation valve, is configured for reversibly switching the closure flap from a first position in which it completely closes the valve duct, to a second position in which it completely opens the valve duct and vice versa.

This way neither an accurate mapping nor a whatever mapping of the relation between the opening degree, or angular position, of the closure flap and the air flow flowing along the ventilation duct is necessary, greatly simplifying and making more robust and effective the control of the valve.

In an advantageous embodiment, said motor is a synchronous motor; this kind of motor has a high mechanical efficiency, can open and close the closure flap very quickly and can easily have quite a simple construction and low production costs; if coupled to a suitable gear reduction unit it can advantageously block the closure flap in a predetermined position, for example completely open or completely closed.

In an advantageous embodiment of the oven, the valve body forms a motor support portion to which the motor is fixed, allowing to reduce the number of parts of the controlled ventilation valve and simplifying its assembling process.

In an advantageous embodiment of the oven, said two valve body parts preferably comprise at least part of the motor support portion.

In an advantageous embodiment of the oven, each of the at least two valve body parts forms a separation surface, at which the at least two valve body parts engage one with another when the controlled ventilation valve is assembled.

In an advantageous embodiment of the oven, when the controlled ventilation valve is assembled the separation surfaces extend substantially transversally or perpendicularly to the axis of said valve duct, allowing the assembling process be simplified.

Preferably the longitudinal axis of the valve duct is substantially rectilinear.

In an advantageous embodiment of the oven, the controlled ventilation valve comprises one or more intermediate gaskets, each of which forms a valve body portion, interposed between said at least two valve body parts, so as to enhance the sealing between said at least two valve body parts.

In an advantageous embodiment of the oven, the controlled ventilation valve comprises a flap body forming said closure flap and comprising at least one shaft portion engaging the valve body so as to allow the flap to rotate about said predetermined rotation axis.

In an advantageous embodiment of the oven, the flap body forms at least two shaft portions, each of which configured for engaging the valve body so as to allow the flap to rotate about said predetermined rotation axis.

In an advantageous embodiment of the oven, the controlled ventilation valve comprises one or more intermediate gaskets, and the flap body is configured for abutting against said one or more intermediate gaskets at least when the flap body closes the valve duct.

This arrangement allows closing the valve duct with a good seal with a reduced number of parts; in particular this arrangement allows the same intermediate gasket or gaskets to carry out multiple functions, that is sealing several contact zones of the controlled ventilation valve, for example the zone of contact of the two valve body parts one with another and the zone of contact of the valve body with the closure flap.

In an advantageous embodiment of the oven, each of said one or more intermediate gaskets forms at least one gasket shaft portion interposed between at least one of said valve body parts and said at least one shaft portion of the flap body .

In an advantageous embodiment of the oven, each of said one or more intermediate gaskets forms at least two gasket shaft portions, each of which is interposed between at least one of said valve body parts and said at least one shaft portion of the flap body .

In an advantageous embodiment of the oven, each of said valve body portions of the intermediate gaskets has substantially an overall arched shape.

Preferably the cross-sections of each of said valve body portions has substantially an overall arched shape in an ideal section plane perpendicular to the longitudinal axis of the valve duct, when the controlled ventilation valve is assembled.

In an advantageous embodiment of the oven, each of said gasket shaft portions has substantially an overall arched shape.

Preferably the cross-sections of each of said gasket shaft portions has substantially an overall arched shape in an ideal section plane perpendicular to the rotation axis of the closure flap, when the controlled ventilation valve is assembled.

The arched shapes of the valve body portions and the gasket shaft portions helps to simplify the shape and the assembling of the intermediate gaskets, and allowing the gaskets be moulded with simpler and cheaper moulds; furthermore it allows the valve duct have circular cross sections, reducing the pressure drops in the valve and in the ventilation duct. In an advantageous embodiment of the oven, each of said gasket shaft portion extends preferably around only part of the cross-sections of at least one of the shaft portions of the valve body by an angle equal to or smaller than **190°** degrees, wherein said angle is measured referring to said rotation axis of the shaft portion of the flap body.

In an advantageous embodiment of the oven, the at least one shaft portion of the flap body forms a side surface, each of the gasket shaft portions forms at least one peripheral rib pressing against said side surface so as to enhance the sealing between the intermediate gasket and the shaft portion.

In an advantageous embodiment of the oven, each of the gasket shaft portions forms at least two peripheral ribs, each of which presses against said side surface of the at least one shaft portion of the flap body so as to enhance the sealing between the intermediate gasket and the shaft portion.

In an advantageous embodiment of the oven, the at least one shaft portion forms at least one shoulder lying in a surface substantially perpendicular or transversal to said rotation axis.

In an advantageous embodiment of the oven, each of the gasket shaft portions forms at least one axial rib extending in a direction longitudinal to the rotation axis of the flap body and pressing against said at least one shoulder so as to enhance the sealing between the intermediate gasket and the at least one shoulder.

This arrangement allows the intermediate gaskets to carry out multiple functions, providing an improved sealing between the valve body and the flap body and to seal several contact zones of the controlled ventilation valve.

In an advantageous embodiment of the oven, each peripheral rib and each axial rib of the same intermediate gasket advantageously protrude in directions substantially transversal one to another, more preferably in directions substantially perpendicular one to another, so as to increase the sealing effect of one intermediate gasket and to reduce the number of gaskets of the controlled ventilation valve for keeping air or gas leakages below a predetermined level.

In an advantageous embodiment of the oven, at least two of said intermediate gaskets have a substantially identical shape one to another, allowing for example the intermediate gaskets be produced with a same moulding cavity or with the same mould, allowing thereby the mould investments.

In an advantageous embodiment of the oven, preferably all of said intermediate gaskets have a substantially identical shape one to another.

In an advantageous embodiment of the oven, at least two of said intermediate gaskets are assembled in the controlled ventilation valve in positions which are symmetrical relative to an ideal symmetry axis which is perpendicular or transversal to the longitudinal axis of said valve duct.

In an advantageous embodiment of the oven, said ideal symmetry axis is the rotation axis of the flap body, and one of the two intermediate gaskets ideally coincides with the other intermediate gasket if ideally rotated by **180°** around said rotation axis.

These symmetrical arrangement of the intermediate gaskets allows them to be assembled in different positions of the controlled ventilation valve and sealing different zones of the valve, reducing the air leakages in or from the valve and at the same time reducing the costs of the moulds for producing the intermediate gaskets.

In an advantageous embodiment of the oven, the controlled ventilation valve comprises:
- a motor for driving the closure flap, causing it to rotate so as to at least partially open and at least partially close the ventilation duct; and
- a drive system comprising an elastic member configured for being driven by the motor and driving the closure flap.

Such elastic member has mainly two functions: firstly it avoids a rigid connection of the closure flap with the motor, reducing the torque applied by the motor to the closure flap when the latter abuts against suitable abutments made in the vale body when the motor makes excessive rotations, after the closure flap has reached the ends of its strokes, fully closing or fully opening the valve duct; and at the same time, the elastic member ensures that the closure flap actually reaches its stroke end, corresponding to the condition of complete -or maximum- closure or opening of the valve duct, should the motor stop its stroke too early.

To this purpose, in an advantageous embodiment of the oven, the controlled ventilation valve is configured for causing the motor to carry out an additional rotation after the closure flap has closed the valve duct abutting (or however resting) against the valve body; this additional rotation avoids that the motor stops its stroke prematurely leaving the valve duct incompletely closed.

Still to this purpose, in an advantageous embodiment of the oven, the controlled ventilation valve is configured for causing the elastic member to push the closure flap against the valve body so as to close or tend to close the valve duct when the motor is not active, at or near its stroke end corresponding to the closure condition of the valve duct.

In an advantageous embodiment of the oven, the elastic member has a torsional stiffness such that the intermediate gaskets apply a drag torque to the closure flap, lower than the maximum torque the motor can produce, at least in the first instants when the closure flap starts resting against the intermediate gaskets.

This way the closure flap is able to press and deform the intermediate gaskets, at least to some extent, ensuring a good sealing between the closure flap and the valve duct.

In an advantageous embodiment of the oven, the elastic member has a torsional stiffness preferably equal to or lower than **600** Nmm/rad (Newton* millimetre/radiant), more preferably equal to or lower than **300** Nmm/rad, more preferably equal to or lower than **200** Nmm/rad, even more preferably equal to or lower than **170** Nmm/rad.

In an advantageous embodiment of the oven, the torsional stiffness of the elastic member can be for example comprised between **50-300** Nmm/rad, more preferably comprised between **155-175** Nmm/rad and even more preferably comprised between **163-168** Nmm/rad.

These stiffness values allow to obtain a good sealing within the valve duct choosing not too hard intermediate gaskets and driving the closure flap with motors of relatively small size.

In an advantageous embodiment of the oven, the elastic member can comprise a coil spring or a portion of a shaft so restricted to be sufficiently elastic and deformable. In an advantageous embodiment of the oven, the flap body forms or is connected to a cam profile, which rotates rigidly connected with the motor shaft, and the controlled ventilation valve comprises at least one switch controlling the activation and deactivation of the motor and controlled by the cam profile.

In an advantageous embodiment of the oven, the controlled ventilation valve comprises at least a first and a second switch controlled by the cam profile, the first switch triggers the activation and deactivation of the motor when the closure flap is closing or almost closing the valve duct, the second switch triggers the activation and deactivation of the motor when the closure flap leaves the valve duct completely open or almost open.

In an advantageous embodiment of the oven, the at least one switch comprises a displaceable control element, such as a control lever and/or a control press-button, controlling the at least one switch, preferably its activation and deactivation.

In an advantageous embodiment, such displaceable control element is advantageously controlled by the cam profile. In an advantageous embodiment, the first and second switches send a closure or opening signal to the logic unit controlling the position of the closure flap and, depending on said closure or opening signal, said logic unit activates or deactivates the power supply to the motor.

This way (case A) the first and second switches are crossed by weaker electric current than if (case B) they would directly open or close the electric line powering the motors, the internal electrical contacts of the first and second switches undergo a lighter wearing and have a much longer operating life.

The inventors observed that in case A some switches reached three millions opening/closing cycles before breaking, and in case B broke after **700.000** opening/closing cycles only.

In an advantageous embodiment, the controlled ventilation valve or more generally the oven is provided with at least a solid state switch configured for allowing or interrupting the power supply to the motor.

Such solid state switch is preferably a triac, but can be for example as well a thyristor or a solid state relay (SSR).

In a further preferred aspect, the invention relates to a controlled ventilation valve for a cooking oven, wherein the cooking oven comprises cooking chamber configured for containing foodstuff to be cooked and a ventilation duct configured for taking external air into the cooking chamber, and the controlled ventilation valve is configured for being assembled in the ventilation duct so as to adjust the flow or air through the latter, wherein the controlled ventilation valve comprises:
- a valve body forming a valve duct fluidly connected to the ventilation duct; and
- a closure flap configured for rotating around a predetermined rotation axis within said valve duct, so as to at least partially open and close the latter and adjust the flow of air flowing in the ventilation duct.

These and other features and advantages of the invention will be better apparent from the following description of an exemplary and non-limitative embodiment, to be read with reference to the attached schematic drawings, wherein:
- Figure **1** is a schematic front view of an oven according to a particular embodiment of the invention;
- Figure **2** is a schematic side view of the oven of Figure **1****,** with some parts removed for more clarity;
- Figure **3** shows a perspective view of a controlled ventilation valve of the oven of Figures **1****,** **2****;**
- Figure **4** shows a perspective exploded view of the valve of Figure **3****;**
- Figure **4A** shows a perspective exploded view of a transmission joint and an elastic member of the valve of Figure **3****;**
- Figure **4B** shows a perspective view of a switch controlling the closure flap of the valve of Figure **3****;**
- Figure **5** shows a perspective view of an intermediate gasket of the valve of Figure **3****;**
- Figure **5A** shows a perspective view of a first detail of the intermediate gasket of Figure **5****;**
- Figure **5B** shows a perspective view of a second detail of the intermediate gasket of Figure **5****;**
- Figure **6** shows a perspective view of the two intermediate gaskets of of the valve of Figure **3****,** assembled one to another;
- Figure **7** shows a top view of the valve of Figure **3****;**
- Figure **8** shows a first cutaway perspective view of the valve of Figure **3****,** ideally cut according to a section plane VIII-VIII;
- Figure **8A** shows a detail of Figure **8****,** observed in a direction perpendicular to the plane VIII-VIII;
- Figure **9** shows a second cutaway perspective view of the valve of Figure **3****,** ideally cut according to a section plane IX-IX;
- Figure **9A** shows a detail of Figure 9, observed in a direction perpendicular to the plane IX-IX;
- Figure **9B** shows a detail of Figure 9A, observed in a direction perpendicular to the plane IX-IX.

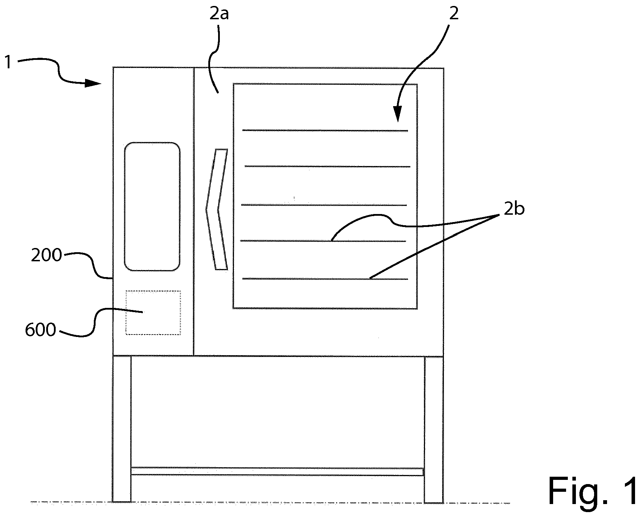

With reference initially to Figure **1****,** a cooking oven **1** according to the invention is schematically described.

In the present description, the wordings "upstream, downstream" are to be understood referred to the direction of flow of air or other fluids in the oven **1,** during the functioning of the latter.

It is underlined that all the functions of the oven can be advantageously controlled by a suitable electronic controller, for example a programmed or programmable electronic board, schematically illustrated in Figure **1** by a dashed square **600.**

The cooking oven comprises an external casing **200,** containing a cooking chamber **2,** wherein foodstuffs can be placed for being cooked; preferably, the cooking chamber is accessible via a door **2**a.

In an advantageous embodiment, like in the examples of attached figures, the cooking chamber **2** contains a plurality of trays or racks **2**b, wherein foodstuff, or pots or trays containing foodstuff, can be placed for being cooked.

The cooking chamber **2** has a bottom wall **3.**

Advantageously, the bottom wall **3** is provided with a first cooking chamber outlet **4** positioned in such a way to receive grease or liquid dripped from the foodstuff being cooked and collected in the bottom wall **3.**

Advantageously, the cooking oven further comprises a heating device **8** configured for heating the internal of the cooking chamber **2;** the heating device **8** can be an electrical heater, or (as in the examples illustrated in attached figures) hot tubes wherein the hot fumes exiting a gas burner flows, a heat exchanger, etc.

Advantageously, the cooking oven **1** comprises a perforated suction wall **18** separating the cooking chamber **2** from a heating chamber **19** containing, at least partially, the heating device **8,** and, preferably, a fan **20** configured for circulating heated air through the cooking chamber **2** and the heating chamber **19.**

The cooking oven **1** comprises a vapour outlet duct **9** configured for discharging vapour from the cooking chamber **2;** the vapour outlet duct **9** can advantageously discharge the vapour in the external environment around the cooking oven **1,** or it can be advantageously connected to a vapour discharge system, preferably provided in the building where the cooking oven **1** is installed.

Advantageously, the vapour outlet duct **9** comprises a vapour outlet valve **45,** for selectively opening or closing the vapour outlet duct **9,** so as to regulate the discharge of the vapour and of the humidity possibly present in the cooking chamber **2** in the external environment.

More particularly the vapor outlet valve **45** is preferably configured for selectively partially or completely open and partially -that is choking- or completely closing the outlet duct **9.**

In a preferred embodiment, as in the one shown in the attached figures, the vapour outlet duct **9** comprises a bottom region **9**a, positioned, in the operative position of the cooking oven **1,** at least partially below the cooking chamber **2,** and fluidly connected downstream of said second cooking chamber outlet **10.**

More preferably, as in the examples of the attached figures, the bottom region **9**a of the vapour outlet duct **9** is slightly inclined in such a way that liquid contained therein tends to flow, by gravity, in counter-current with respect to the vapour flowing through the bottom region **9**a; in other words, the bottom region **9**a is preferably inclined in such a way to define a backwards slope.

Preferably, the vapour outlet duct **9** comprises an end region **9**b protruding upwards from the bottom region **9**a, from which vapour is released in the environment.

Advantageously, the end region **9**b is substantially vertical.

Preferably, as in the examples illustrated in attached figures, the cooking oven **1** comprises a ventilation duct **21** fluidly connected to the cooking chamber **2** and configured for selectively taking air from the external environment into the cooking chamber **2.** Preferably, the ventilation duct **21** comprises an outlet **21**a provided at the heating chamber **19,** more preferably in proximity to the fan **20.**

Advantageously, the ventilation duct **21** is provided with a controlled ventilation valve **22** for selectively closing the ventilation duct **21** so as to adjust the flow of air through the duct **21.**

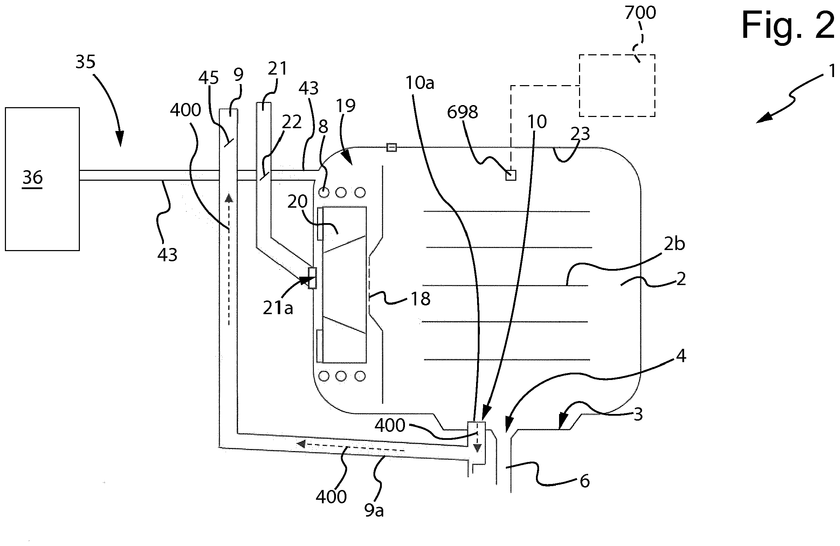

As in the embodiment of Figure **2****,** the controlled ventilation valve **22** is arranged upstream to the fan **20,** for example in a section of the ventilation duct **21** feeding the fan **20** with air sucked from the external environment.

In an advantageous embodiment, like for example that shown in Figure **2****,** the cooking oven **1** comprises a steam supply system **35** configured for producing and supplying steam into the cooking chamber **2.**

Advantageously the steam supply system **35** can comprise a boiler **36** and a steam duct **43.**

The boiler **36** is configured for producing steam and is fluidly connected to the cooking chamber **2** through the steam duct **43** so as to release into the chamber **2.**

Preferably, the boiler **36** comprises a water reservoir fillable with water, and a water heater for heating water loaded within the water reservoir.

According to an aspect of the present invention, the controlled ventilation valve **22** comprises:
- a valve body **50** forming a valve duct **52** fluidly connected to the ventilation duct **21;** and
- a closure flap **54** configured for rotating around a predetermined rotation axis **AR** within said valve duct **52,** so as to at least partially open and close the valve duct **52** and adjust the flow of air flowing in the ventilation duct **21.**

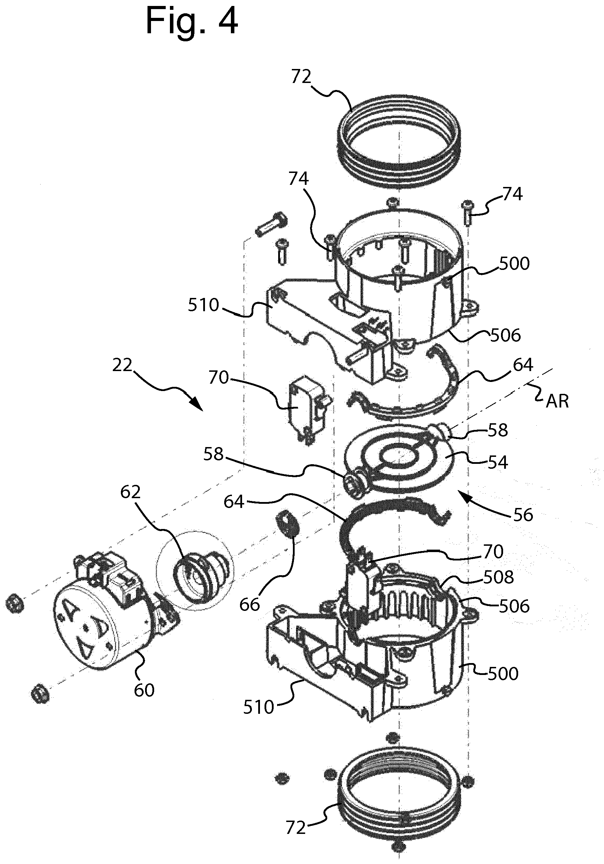

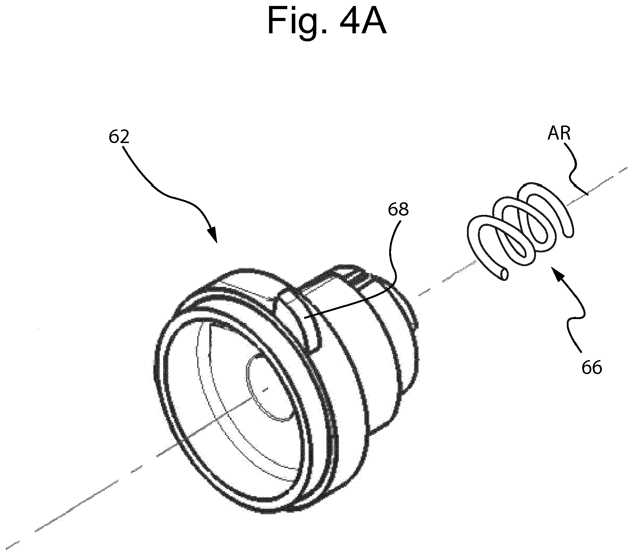

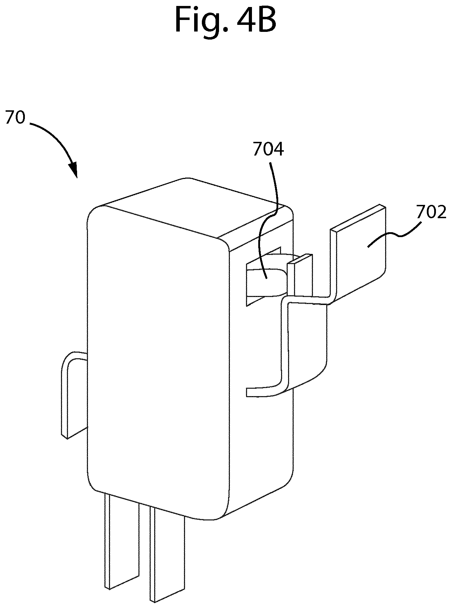

As shown for example in Figure **4****,** the controlled ventilation valve **22** advantageously comprises a flap body **56** forming said closure flap **54** and preferably comprising as well at least one shaft portion **58** engaging the valve body **50,** so as to allow the flap **54** to rotate about said predetermined rotation axis **AR.**

Preferably the flap body **56** forms at least two of said shaft portions **58,** each of which configured for engaging the valve body **50** so as to allow the flap **54** to rotate about the rotation axis **AR.**

As shown for example in Figure **4****,** the closure flap **54** can have substantially the shape of a disk or another kind of plate, possibly but not necessarily flat.

Like for example in the embodiment of the enclosed Figures, the controlled ventilation valve **22** is a butterfly valve: to this regard, the rotation axis **AR** of the flap **54** crosses the closure flap **54** in a middle region thereof, and substantially not at one peripheral edge of the flap **54.**

The rotation axis **AR** of the flap **54** can also advantageously lie in a middle region of the plan projection of the closure flap **54.**

Advantageously, the oven can comprise a humidity control system configured for controlling the amount of humidity in the cooking chamber **2.**

Such humidity control system can advantageously comprise:
- at least one humidity detector **698** configured for detecting the amount of humidity in the cooking chamber **2** when the oven operates **1**; and
- a logic unit **700** controlling the position of the closure flap **54** based on the detections of the at least one humidity detector **698.**

The logic unit **700** can be for example the electronic controller **600** or another logic unit.

For example, the logic unit **700** can cause the closure flap **54** to open -completely or in part- when too much humidity is detected in the cooking chamber **2** for example by the humidity detector **698,** and for example the logic unit **700** can cause the closure flap **54** to close -completely or in part- when the humidity detector **698** -or controller **66** or valve **2-**detects a too few humidity in the cooking chamber **2.**

As for example shown in Figure **4****,** the valve body **50** advantageously comprises at least two valve body parts **500** fixed one another with said closure flap **54** pivotably positioned between said body parts **500.**

The valve body parts **500,** the flap body **56** and the transmission joint **62** (described later) can be made for example of synthetic resins or of metallic materials; advantageously, they can be made by injection moulding.

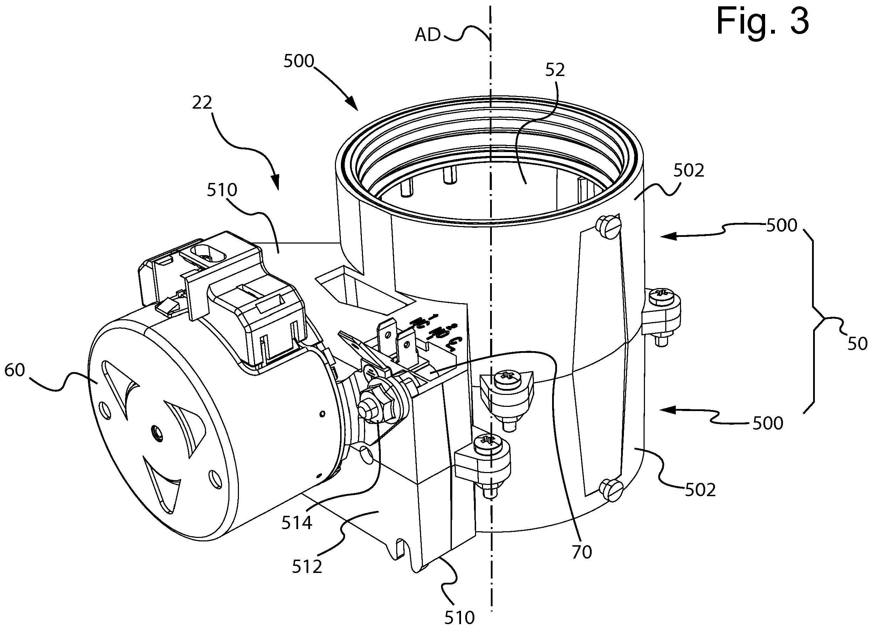

As for example in the embodiment of Figure **3****,** **4****,** at least a part of the valve body forms a substantially tubular portion **502** forming at least part of the valve duct **52.**

As for example shown in Figures **3****,** **4** each tubular portion **502** can have a substantially cylindrical shape and substantially circular cross-sections.

Preferably the valve duct has a substantially rectilinear longitudinal axis **AD** (Figure **3**). As for example shown in Figure **4****,** each of the at least two valve body parts **500** forms a separation surface **506,** at which the at least two valve body parts **500** engage one with another when the controlled ventilation valve **22** is assembled.

In an advantageous embodiment of the oven, the separation surfaces extend substantially transversally or perpendicularly to the longitudinal axis of said valve duct, allowing the assembling process be simplified.

As for example shown in Figure **4****,** such separation surfaces **506** can form substantially a plurality of edges; advantageously such edges **506** of a first valve body part **500** mates with the edges **506** of a second valve body part **500.**

Said edges or other separation surfaces advantageously form a recess **508** for housing at least part -for example half of a cross section- of one shaft portion **58** of the closure flap **54.**

Each recess **508** has advantageously a semi-circular shape.

When the valve **22** is assembled, each shaft portion **58** is preferably housed within and blocked by two recesses **508** facing one another.

Advantageously the valve body **50** comprises two of said valve body parts **500,** the shapes of which are identical or substantially identical one another, preferably similar enough to allow the two body parts **500** be moulded in one and substantially the same moulding cavity of a mould, in case adding or removing movable inserts in order to reproduce possible and slight shape differences between the two valve bodies **50.**

As for example shown Figures **3****,** **4** the two valve body parts **500** are preferably arranged, when assembled one to another, substantially symmetrically or mirror-like one to another relative to an ideal reflection plane, said ideal reflection plane being arranged between said two valve body parts.

As for example shown in Figures **3****,** **4****,** such ideal reflection plane can contain the rotation axis **AR** and at least part of the edges or other separation surfaces **506** and be perpendicular to the longitudinal axis **AD** of the valve duct **52.**

As for example shown in Figures **3****,** **4****,** the two valve body parts **500** can be assembled symmetrically or mirror-like one to another relative to said ideal reflection plane, when assembled one to another, in such a way that one of the two valve body parts **500** coincide with the other valve body part **500** rotated by **180°** around an axis lying in said ideal reflection plane, for example around the rotation axis **AR.**

In an advantageous embodiment such as that of Figures **3****,** **4****,** the controlled ventilation valve **22** comprises a motor **60** driving the closure flap **54,** in particular causing the flap **54** to rotate around the rotation axis **AR** so as to reversibly open -partially or completely- and close -partially or completely- the valve duct **52.**

Advantageously the motor **60** is configured for switching the closure flap from a first position in which it completely closes the valve duct **52,** to a second position in which it completely opens the valve duct **52.**

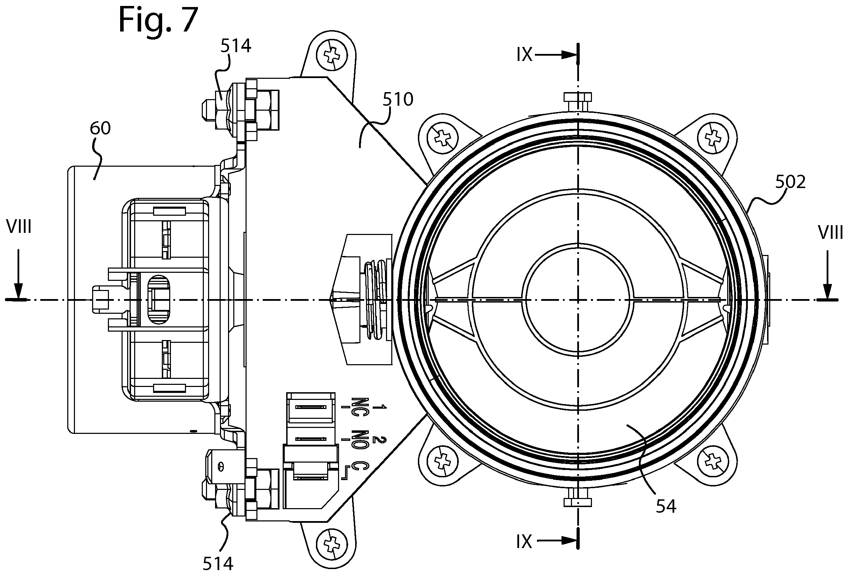

An example of the first position of complete closure of the valve duct is shown in Figures **7****,** **8****,** **9****,** **9A****,** **9B****;** in this first position the closure flap **54** can lie for example in a plane substantially perpendicular to the axis AD of the valve duct **52.**

In an example of the second position of complete opening of the valve duct, the closure flap can lie for example in a plane substantially containing -or more generally parallel to-the axis AD of the valve duct **52.**

That is, a particular embodiment the closure flap can pass from the first position of complete closure of the valve duct to the second position of complete opening and vice versa for example rotating by about 90°.

Preferably the motor **60** is not configured for controlling the flow rate in the valve duct **52** leaving the closure flap for relatively long times -for example more than half a second or several seconds- in intermediate positions, that is in which the closure flap **52** is clearly inclined relative to the axis AD of the duct **52,** for example inclined by **15°, 30°, 45°** degrees.

The motor **60** is preferably an electrical motor, more preferably a synchronous motor.

In other particular embodiments the motor **60** can be more generally an alternate or direct current motor.

In an advantageous embodiment, the valve body **50** forms a motor support portion to which the motor **60** is fixed.

Advantageously each of the valve body parts **500** preferably forms at least part **510** of the motor support portion.

As for example shown in Figures **3****,** **4** each part **510** of the motor support portion can advantageously form substantially a box enclosing, for example, the transmission joint **62** described later in further detail.

As shown in Figure **3****,** the motor **60** can be preferably fixed outside said box formed by the motor support portion.

Preferably, the motor **60** can be fixed to a fastening wall **512** formed by the motor support portion.

The fastening wall **512** forms preferably a substantially flat face lying in a plane perpendicular to the rotation axis **AR.**

The motor **60** can be fastened for example with bolts **514** and suitable brackets to the fastening wall **512.**

Advantageously, as for example shown in Figure **4-6** the controlled ventilation valve **22** comprises one or more intermediate gaskets **64,** each of which preferably forms a valve body portion **640,** interposed between said at least two valve body parts **500** so as to enhance the sealing between said at least two valve body parts **500** and more generally prevent air leakages from the valve body **50.**

Each intermediate gasket **64** are preferably made of relatively soft synthetic resin such as an elastomeric material such as rubber or silicone.

Preferably each intermediate gasket **64** has a hardness comprised between **20-70** ShoreA, and more preferably between **30-50** ShoreA.

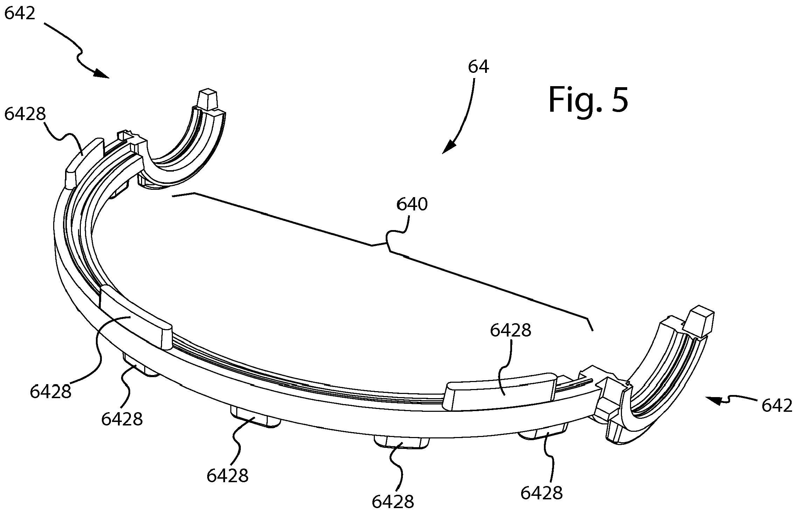

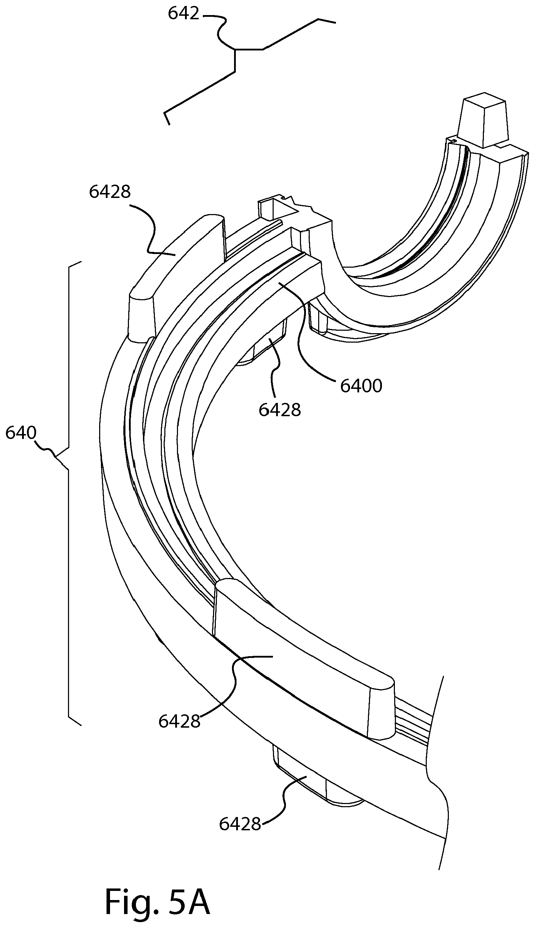

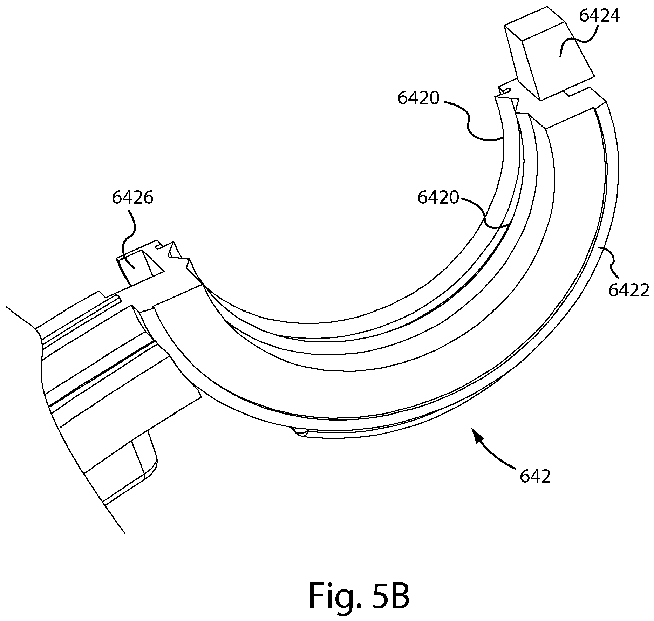

The intermediate gaskets **64** can be obtained for example through injection moulding. Preferably, as shown for example in Figures **4****,** **5** the valve body portion **640** has substantially an overall arched shape.

Preferably the cross-sections of each of said valve body portions **640** has substantially an overall arched shape in an ideal section plane perpendicular to the longitudinal axis **AD** of the valve duct, when the controlled ventilation valve **22** is assembled.

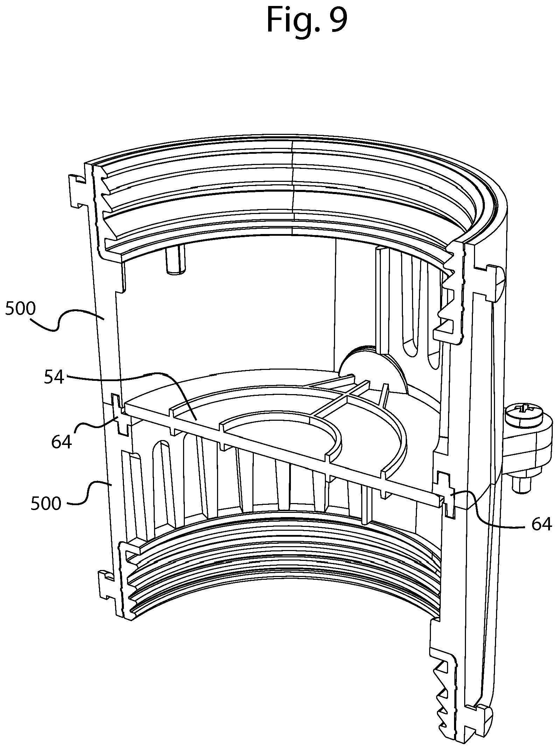

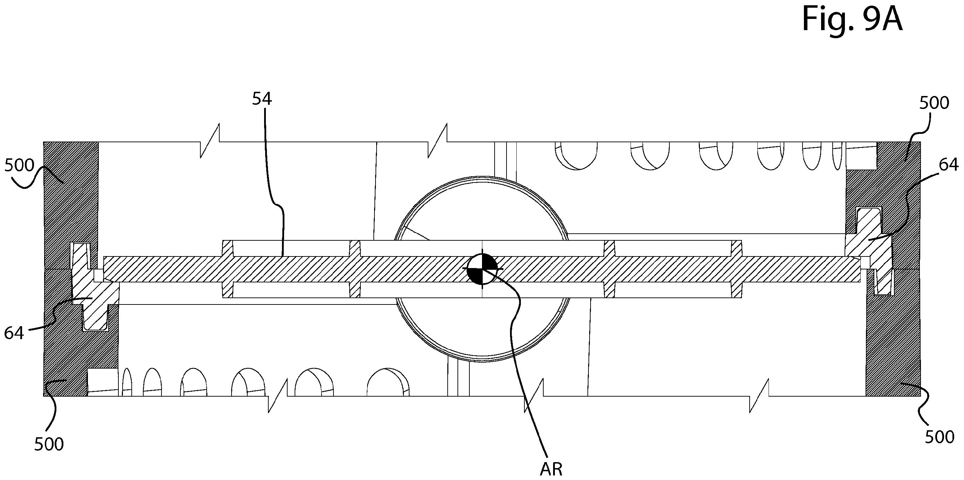

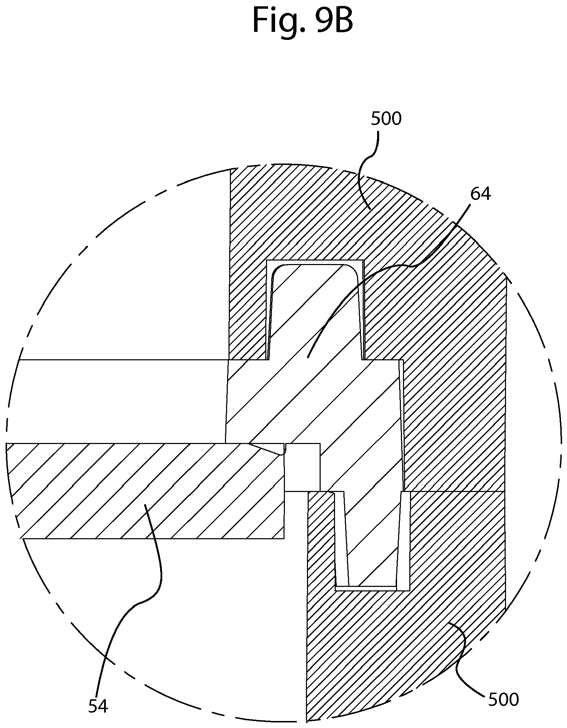

Advantageously, as for example in the embodiment of Figure **9****,** **9**A the flap body **56** is configured for resting against the intermediate gasket or gaskets **64** at least when the closure flap **54** closes the valve duct **52.**

To this end, the valve body portion **640** advantageously forms an abutment surface **6400** against which the closure flap **54** abuts when it closes the valve duct **52,** as for example in the embodiment of Figure **5**A.

Such abutment surface **6400** can have the shape for example of a planar surface extending along the valve body portion **640** and advantageously lying for example in an ideal plane substantially perpendicular or transversal to the longitudinal axis **AD** of the valve duct **52.** If the abutment surface **6400** lies in an ideal plane substantially perpendicular or transversal to the longitudinal axis **AD** of the valve duct **52,** the frictions between the closure flap and the intermediate gaskets **64** during operation are greatly reduced, as well as the power consumption of the valve **22;** at the same time reliability and the operating life of the valve are considerably increased.

Preferably, as shown for example in Figures **5****,** **8****,** **8A****,** **9****,** **9**A each one of the intermediate gaskets **64** forms at least one gasket shaft portion **642** interposed between at least one of the valve body parts **500** and at least one shaft portion **58** of the flap body **56.**

More preferably, each one of the intermediate gaskets **64** forms at least two gasket shaft portion **642,** each of which is interposed between at least one of the valve body parts **500** and a respective shaft portion **58** of the flap body **56.**

Each gasket shaft portion **642** houses a respective shaft portion **58** of the flap body **56.**

Preferably, as shown form example in Figure **5** each gasket shaft portion **642** has substantially an overall arched shape.

Preferably the cross-sections of each of said gasket shaft portions **642** has substantially an overall arched shape in an ideal section plane perpendicular to the rotation axis **AR** of the closure flap **54,** when the controlled ventilation valve **22** is assembled.

To this end, each gasket shaft portion **642** extends preferably around only part of the cross-sections of a respective shaft portion **58** of the valve body **56,** preferably by an angle equal to or smaller than **190°** degrees, wherein said angle is measured referring to said rotation axis of the shaft portion of the flap body.

As for example shown in Figures **4****,** **5****,** **6** each gasket shaft portion **642** can preferably extend around a respective shaft portion **58** by an angle of about **180°;** in other embodiments, not shown each gasket shaft portion **642** can extend around a respective shaft portion **58** for example by an angle of about **130°-170°** or **130°-180°,** wherein said angles are measured referring to said rotation axis of the shaft portion of the flap body.

As for example shown in Figures **4****,** **9** each one of the gaskets **64** advantageously engages the edges of the body parts **500** forming the above-mentioned separation surface **506.**

As for example shown in Figure **5**A, **5**B, each intermediate gasket **64** can be advantageously provided with suitable centering protrusions **6428** configured for fitting in corresponding recesses made in the edges or other separation surfaces **506** of each body part **500,** so as to block each gasket **64** in position and simplifying and speeding up the assembling process of the valve **22.**

As for example shown in Figure **9****,** **9**A at least each valve body portion **640** is preferably interposed between the edges **506** of the two valve body parts **500.**

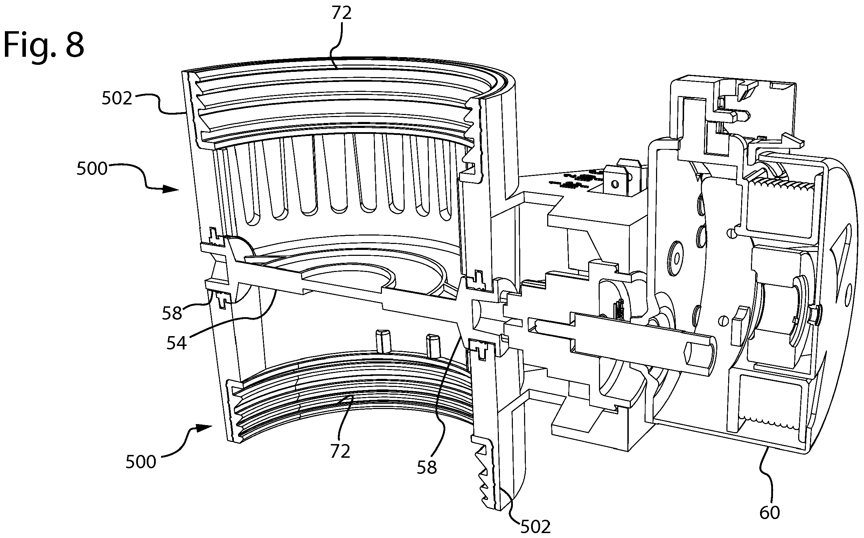

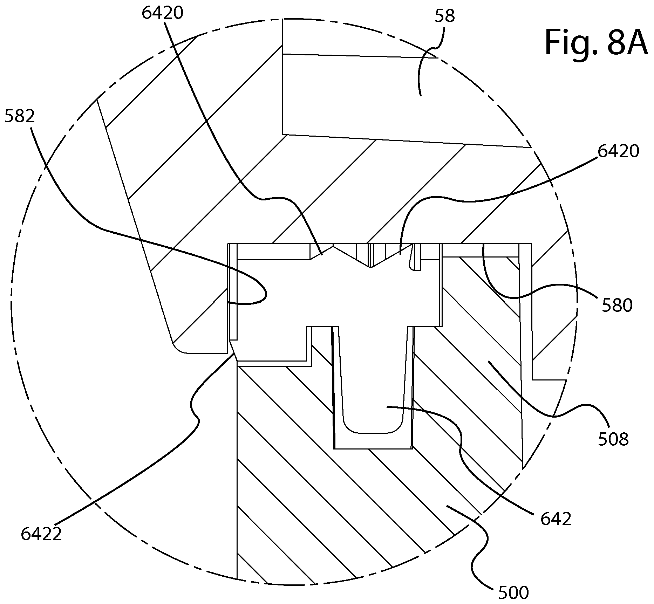

Advantageously, each gasket shaft portion **642** is coupled with one respective recess **508** made in a respective valve body part **500,** in such a way that at least each gasket shaft portion **642** is preferably interposed between one edge **506** of one of the valve body parts **500** and one respective shaft portion **58** of the flap body **56** (Figure **8**A).

Advantageously, one or more shaft portions **58** of the flap body **56** forms a side surface **580,** each gasket shaft portion **642** forms at least one peripheral rib **6420** pressing against said side surface **580** so as to enhance the sealing between the intermediate gasket **64** and the shaft portion **58** (Figure **5B****,** **8**A).

To this end, each peripheral rib **6420** protrudes preferably in a direction substantially perpendicular or transversal to the rotation axis **AR.**

Still to this end, each peripheral rib **6420** extends around the rotation axis **AR** and/or to a respective side surface **580** or more generally around a respective shaft portion **58.** Preferably, each gasket shaft portion **642** forms two or more peripheral ribs **6420;** in that case the ribs **6420** extend preferably one substantially parallel, or longitudinal, to another, as for example in the embodiment of Figure **5B****,** **8**A:
Two or more peripheral ribs **6420,** arranged side by side one with another, seal the connection zones with the shaft portions **58** much more efficiently, exploiting a sort of labyrinth seal effect.

Each peripheral rib **6420** preferably extends continuously around the whole cross-sections of the respective side surface **580.**

Preferably, each peripheral rib **6420** protrudes from a curved face of the gasket shaft portion **642** facing the side surface **580** of a shaft portion **58;** such curved face can have for example substantially the shape of a cylindrical sector or of a sector of a surface of revolution.

Preferably, each peripheral rib **6420** forms substantially a continuous crest.

As shown for example in Figures **5B** and **8**A, one or more shaft portions advantageously form at least one shoulder **582** lying in an ideal surface substantially perpendicular or transversal to the rotation axis **AR.**

As shown for example in Figures **5**B**, 6** and **8**A, each gasket shaft portion advantageously forms one or more axial ribs **6422,** each of which protrudes preferably in a direction substantially parallel or longitudinal to the rotation axis **AR** and presses against the respective shoulder **582** so as to enhance the sealing between the intermediate gasket **64** and the shoulder **582.**

Each axial rib **6422** preferably extends continuously around the rotation axis **AR** at a suitable distance from it.

Preventing leakages through the shaft portions **58** avoids steam condensation in inner spaces of the oven containing electric and electronic component, consequently preventing electric malfunctions.

It is pointed out that adding one axial rib **6422** abutting against the shoulder **582** enhances the sealing more efficiently than adding for example a third peripheral rib **6420,** since the latter would reduce the pressure of the shaft portion **58,** while the axial rib **6422** does not. Furthermore the peripheral **6420** and axial ribs **6422** reduce the dynamic friction between valve body **50** and flap body **56.**

As shown for example in Figures **5B** and **8**A, each peripheral rib **6420** and each axial rib **6422** advantageously protrude in directions substantially transversal one to another, more preferably in directions substantially perpendicular one to another.

The ribs **6420, 6422** can have sharp, or smooth, cross sections.

For example the cross sections of ribs **6420, 6422** can have a substantially step-like or sinusoidal profile.

The ribs **6420** of Figure **5B** have advantageously substantially triangular and sharp cross-sections, while the rib **6422** of the same Figure has advantageously a step-like and sharp cross-section.

Advantageously, as for example in the embodiment of the enclosed Figures, at least two of said intermediate gaskets **64,** and more preferably all of them, have a substantially identical or sufficiently similar shape one to another, allowing for example the intermediate gaskets be produced with a same moulding cavity or with the same mould, in case adding or removing movable inserts in order to reproduce possible and slight shape differences between the two intermediate gaskets **64.**

As for example in the embodiment of Figures **4****,** **5****,** **6** at least two intermediate gaskets **64** are assembled in the controlled ventilation valve **22 in** positions which are symmetrical relative to an ideal symmetry axis which is perpendicular or transversal to the axis **AD** of the valve duct.

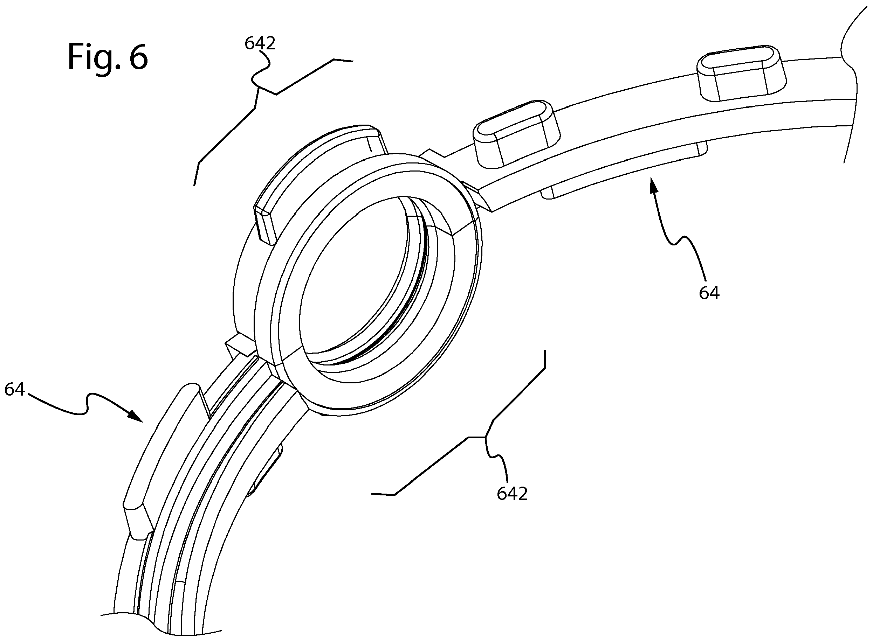

Said ideal symmetry axis can be advantageously the rotation axis **AR** of the flap body **56,** and the two gaskets **64** are positioned in the assembled valve **22** in such a way that one of them coincides with the other intermediate gasket **64** if ideally rotated by **180°** around the rotation axis **AR** or other symmetry axis, as shown for example in Figure **6****.** Advantageously, each gasket shaft portion **642** is provided with a centering tooth **6424** and a centering recess **6426.**

Each centering tooth **6424** is preferably configured for fitting in a centering recess **6426** of the other gasket **64,** causing at least some cross sections of the shaft portions **58** of the flap body **56** to be wholly enclosed in two gasket shaft portion **642** of two respective gaskets **64** after a quick, easy and precise assembling, as shown in Figure **6****,** preventing or greatly reducing the air -or in general gas- leakages through gaps between the shaft portions **58** and the flap body **56.**

As shown for example in Figures **4** and **4**A the controlled ventilation valve **22** comprises a drive system configured for being driven by the motor **60,** and for driving the closure flap **54.**

The drive system can preferably comprise a cam profile **68,** and the controlled ventilation valve **22** can preferably comprise at least one switch **70** controlling the activation and deactivation of the motor **60,** and preferably controlled by the cam profile **68.**

As for example in the embodiment of Figures **4****,** **4**A the drive system can comprise a transmission joint **62** driven by the motor **60** and driving the the closure flap **54.**

The transmission joint **62** can have for example the overall shape of a bushing.

The transmission joint **62** can be for example fitted on the output shaft of the motor **60** and coupled to a shaft portion **58** of the flap body **56.**

The cam profile **68** can be formed by the transmission joint **62,** like for example in the embodiment of Figures **4****,** **4**A, or for example by the flap body **56.**

Preferably the valve **22** is provided with at least a first **70** and a second switch **70,** preferably both controlled by the cam profile **68.**

Preferably the first switch **70** triggers the activation and deactivation of the motor **60** when the closure flap **54** is closing or almost closing the valve duct **52.**

Preferably, the second switch **70** triggers the activation and deactivation of the motor **60** when the closure flap **70** leaves the valve duct **52** completely open or almost open.

Advantageously the first and second switches **70,** when activated for example by the cam profile **68,** send a closure or opening signal to the logic unit **700;** said unit **700,** depending on said closure or opening signal, activates or deactivates the power supply to the motor, for example activating a solid state switch such as a triac, a thyristor or a solid state relay (SSR); said solid state switch is the power switch allowing or interrupting the power supply to the motor **60.**

The solid state switch can withstand a much greater number of ON/OFF switching cycles in its operating life than an electromechanical microswitch, prolonging the operative life of the valve **22.**

In an advantageous embodiment, each switch **70** comprises one or more displaceable control elements, such as the control lever **702** and/or the control press-button **704** of Figure **9**A controlling the activation and deactivation of the switch **70,** that is the opening and closing of the electric circuit of a respective switch **70.**

The displaceable control element **702, 704** is advantageously controlled by the cam profile **68.**

Advantageously, the drive system comprises an elastic member **66** configured for being driven by the motor **60** and driving the closure flap **54.**

Such elastic member has a torsional stiffness such that the intermediate gaskets **64** apply a drag torque to the closure flap **54,** lower than the maximum torque the motor **60** can produce, at least in the first instants when the closure flap **54** starts resting against the intermediate gaskets **64.**

This way the closure flap **54** is able to press and deform the intermediate gaskets **64,** at least to some extent.

Preferably the elastic member **66** has a torsional stiffness preferably equal to or lower than **600** Nmm/rad (Newton*millimetre/radiant), more preferably equal to or lower than **300** Nmm/rad, more preferably equal to or lower than **200** Nmm/rad, even more preferably equal to or lower than **170** Nmm/rad.

The torsional stiffness of the elastic member **66** can be for example comprised between **50-300** Nmm/rad, more preferably comprised between **155-175** Nmm/rad and even more preferably comprised between **163-168** Nmm/rad.

The elastic member **66** can be made, for example, like the coil spring shown in Figures **4****,** **4**A or like a portion of a shaft (nor shown) so restricted to be sufficiently elastic and deformable.

More generally, the elastic member **66** can be a torsion spring or another torsion elastic element, not necessarily metallic. Production tolerances or slight design inaccuracies can cause the switches **70** to trigger too early or to late the deactivation of motor **60** while it is closing the valve duct **52,** even if such anticipations or delays can be relatively slight; this could cause the closure flap **54** either to incompletely close the valve duct **52** allowing air leakages through it if the closure member was a perfectly -or very- rigid body, or to be still driven by the motor **60** even when it already abuts against the abutment surface **6400,** or more generally against the valve body **50,** applying an excessive torque to the valve body **56.**

On the other hand, a slight extra rotation of the motor **60** after the closure flap **54** already completely closed the valve duct **52** -that is when the closure flap already rests against the abutment surface **6400,** or more generally against the valve body **50-** can be a desirable measure to ensure a perfect closure of the duct **52,** and the controlled ventilation valve **22** or more generally the oven **1** is suitably and purposively programmed or however configured to this end.

The elastic member **66** reduces the torques applied by the motor **60** to the flap body **56** when the latter already rests against the abutment surface **6400** or more generally the valve body **50,** that is when the motor carries out such extra-rotations; the member **66** also allows broader tolerances be adopted in designing and manufacturing the valve **22,** in particular in choosing the switch or switches **70** and assembling them in the valve **22,** simplifying its manufacturing and rendering it cheaper.

To this end the controlled ventilation valve **22** or more generally the oven **1** is configured for causing the elastic member **66** to push the closure flap **54** against the valve body **50** so as to close or tend to close the valve duct **52** when the motor **60** is not active at or near its stroke end corresponding to the closure condition of the valve duct.

The valve **22** is preferably provided with two annular gaskets **72** sealing the connections zones of the valve body **50** with one or two segments of the ventilation duct **21,** as shown for example in Figure **4****.**

The motor **60** is advantageously provided with a gear reduction unit (not shown) applying a drag torque sufficiently strong to prevent rotations of the closure flap **54** when the motor **60** is not supplied with power.

This allows the closure flap to keep the valve **22** for example completely closed or completely open for long times even if the motor **60** is not powered, considerably reducing the power consumption of the oven, rendering the motor **60** more advantageous for example than a solenoid, which would need to be always powered in the positions of complete opening OR complete closure of the valve **22.** In the embodiment of Figure **4****,** the gear reduction unit can be for example contained in the cylindrical metal casing of motor **60.**

The assembling of the controlled ventilation valve **22** will be now described in relation to the embodiment shown in the enclosed figures.

The valve **22** can be easily and quickly assembled preparing for example two half-valve sub-assemblies, a first and a second one, each of which can comprise one valve body part **500,** one intermediate gasket **64** and one switch **70.**

The flap body **56** can be then laid on the first half-valve sub assembly, fitting the two shaft portions **58** in a respective recess **508.**

Then the second half-valve sub assembly can be assembled on the first one and fixed to it for example with the screws **74** (Figure **4**), blocking the flap body **56** in its definitive position, with quite a simple, easy and ergonomic assembling process.

When the first and second half-valve assembly are assembled together, the two intermediate gaskets **64** are interposed between the two valve body parts **500,** sealing very efficiently their junction one with another.

The peripheral ribs **6420** and the axial ribs **6422** prevent the leakages of air and other gases along the sides of the shaft portions **58** and, as previously described, each intermediate gasket **64** advantageously also forms an abutment surface **6400** against which the closure flap **54** abuts when it is closed and seals the junction zones between the valve body **50** and the flap body **56.**

Each intermediate gasket **64** seals therefore several junction zones of the valve **22** and carries out several sealing functions, eliminating, or however greatly reducing, the overall air -and more generally gaseous- leakages through the valve **22.**

This allows a well-sealed, air-tight valve **22** be obtained with very few sealing members, such as in the embodiment of Figure **4****,** in which one pair only of intermediate gaskets **64** carries out all these multiple sealing functions.

As previously described, also the assembling of these not numerous intermediate gaskets **64** is quite simple, quick and ergonomic.

The operation of the oven according to the invention will be now explained in relation to the embodiment shown in the enclosed figures.

With reference to the embodiment of figure **2****,** once the foodstuff has been loaded into the cooking chamber **2,** and the door **2**a closed, the cooking process can be started; the heating device **8** and the fan **20** are operated, advantageously by the electronic controller **600** of the cooking oven **1,** according to a specific cooking program selected and/or programmed by a user.

Also the controlled ventilation valve **22** is controlled, for example by the electronic controller **600** of the cooking oven **1** and/or by the logic unit **700,** for controlling the fresh air intake from the external environment into the cooking chamber **2,** advantageously according to the specific cooking program selected and/or programmed by the user. During the cooking process, the steam supply system **35** can be operated, preferably by the electronic controller **600,** according to the specific cooking program selected and/or programmed by a user, in order to take a prefixed steam amount into the cooking chamber **2.**

It is pointed out that the present description relates to an oven provided with a steam generator, but is valid *mutatis mutandis* for an oven lacking the steam generator too.

The steam generated by the steam supply system **35** can be taken into the cooking chamber **2** via the steam duct **43.**

During the cooking process, the vapour present in the cooking chamber **2,** and the high internal temperature, increase the internal pressure, and, when the latter exceeds ambient pressure, vapour is expelled to external of the cooking chamber **2** via the second cooking chamber outlet **10** and the vapour outlet duct **9.**

Vapour outlet valve **45,** if present, is controlled, preferably by the electronic controller **600,** for selectively controlling the vapour discharge.

During the cooking process, grease can fall from the overlying foodstuff to the bottom **3** of the cooking chamber **2,** and it is collected into the cooking chamber outlet **4** and taken to a grease conduit **6,** from which it is collected into a grease container (not shown).

When the closure flap **54** is closed, the intermediate gaskets **64** and the annular gaskets **72** prevent almost completely the air leakages through the controlled ventilation valve **22** and greatly contribute to maintain the desired level of humidity in the coking chamber **2.** When the electronic controller **600** detects for example that this level of humidity is excessive and needs to be reduced quicker than simply deactivating the steam supply system **35** when present, the controller **600** and/or the logic unit **700** can trigger the opening of the controlled ventilation valve **22,** letting drier air from the external atmosphere reach the cooking chamber **2** through the ventilation duct **21.**

The external air inlet can be almost instantly, and this allows, for example, the external air intake to be controlled, adjusting the duty cycle of the valve **22** -or, more precisely, of the closure flap **54-** with an on-off -or bang-bang- control strategy, for example quickly and repeatedly switching the closure flap **54** between a completely open and a completely closed position or between a completely closed (or completely open) position and a partially open position.

In combination, or alternatively, to the on-off control, the closure flap **54** can be opened and closed for example according to a control strategy using a greater number of discretized states, that is varying the opening degree of the closure flap **54** among a number of predetermined values, wherein the number of these predetermined discrete opening values is finite and greater than two, for example equal to or greater than four or ten predetermined opening degrees.

The opening degree of the closure flap **54** can furthermore and for example be varied continuously, that is over a substantially infinite number of values comprised between the fully open and fully closed extreme states.

In other words the valve **22** is well suited to be controlled according to many and very different control strategies, allowing designers to implement optimum cooking programs with extreme freedom, precision and flexibility.

The adoption of a flap valve, more preferably of a butterfly valve, allows the flow rate of the external air introduced in the cooking chamber **2** to be adjusted very precisely, thanks inter alia to the automatic control of the motor **60.**

When the humidity in the cooking chamber **2** has been sufficiently lowered or is too low, the electronic controller **600** and/or the logic unit **700** can cause the valve **22** to be closed again. When the controller **600** and/or the logic unit **700** triggers complete closing of the closure flap **54,** the motor **60** rotates the flap body **56** until the cam profile **68** reaches and activates -that is displaces- the control lever **702** and/or the control press-button **704** of one of the switches **70,** for example the first switch **70,** causing the electric circuit of the switch **70** to stop the motor **60,** for example causing the logic unit **700** to cut off its electric supply.

As partly already described, if the flap body **56** would be a perfectly or very rigid body, due to assembling tolerances and/or to a simple delay time in cutting off the electrical supply of the motor **60,** it could happen that the flap body **56** is stopped too early, when it does not closes the valve duct **52** properly (case A), or too late, some instants after the closure flap **54** already abuts against, for example, the abutment surface **6400** of one of the intermediate gaskets **64** (case B), with the effect of unduly stressing that gaskets, causing the motor **60** to apply unduly and unnecessarily high torque to the flap body **56,** and unduly raising the electrical currents in the motor **60.**

As partly already described, the switches **70** can be positioned and/or the controller **600** can be advantageously arranged in such a way that, for example in design or nominal conditions or more preferably with the most unfavourable production tolerances, when closing the valve the switch **70** stops the motor **7** purposely late, that is a while and/or a certain angle of extra-rotation after that a hypothetically perfectly rigid flap body **56** would already abut against the abutment surface **6400** (or other abutment surfaces of the valve body **50**).

This ensures that the closure flap **54** always completely and properly closes the valve duct **52.**

Preferably the extra rotation angle is equal to or greater than **5°,** more preferably equal to or greater than **10°,** more preferably equal to or greater than **15°,** more preferably comprised between **1°-50°,** even more preferably comprised between **5°-30°,** even more preferably comprised between **10°-20°.**

The spring or other elastic member **66** limits the torque applied on the flap body **56** by the motor **60,** and limits excessive current in the motor **60** when the flap **54** abuts against one gasket **64** or other abutment surfaces of the valve body **50** in its closed position, absorbing smaller excess torque and excess current in case A (premature stop of motor **60**) and greater excess torque and excess current in case B (late stop of motor **60**).

After the motor **60** is deactivated after having closed the valve duct **52,** the spring or other elastic member **66** keeps the closure flap **54** perfectly and constantly abutting against the abutment surface **6400** or other abutments of the valve body **50,** that is keeping the closure flap **54** perfectly closed and contributing to eliminate or greatly reduce leakages through the flap **54,** and reducing the power consumption of the valve **22,** since the valve **22,** thanks for example to the gear reduction unit previously mentioned, can remain perfectly closed (or open) for long time without supplying the motor **60** with power.

The operation of the valve **22** during its opening is similar: when the controller **600** triggers complete opening of the closure flap **54,** the motor **60** rotates the flap body **56** until the cam profile **68** reach and activates -that is displaces- the control lever **702** and/or the control press-button **704** of another one of the switches **70,** for example the second switch **70,** causing the logic unit **700** or the electronic controller **600** to stop the motor **60,** for example cutting off its electric supply when the closure flap **54** is completely or almost open.

It is seen therefore how the invention achieves the proposed aim and objects, there being provided a cooking oven which, thanks to the ventilation duct and the controlled ventilation valve previously described can control very quickly and precisely the amount of humidity in the cooking chamber.

Choosing a flap- or butterfly valve allows to reduce the pressure drop through the controlled ventilation valve when it is completely open, allowing to reduce the cross-sections of the ventilation duct and consequently of the whole oven.

Being provided of two or more valve body parts and intermediate gaskets having identical or similar shape allows the investments for moulds and tooling in general be reduced, the assembly process in the production line be simplified and made less expensive.

The embodiment in which the controlled ventilation valve is provided with a drive system provided with an elastic member configured to be driven by the motor and for driving the closure flap allows ensuring a complete and well-sealed closure of the flap in spite of production tolerances, eliminating or however considerably reducing leakages through the valve and allowing a more precise control of humidity in the cooking chamber.

The embodiment provided with two control switches **70** and the elastic member **66** is advantageous also because it allows perfectly closing and keeping precisely open the valve **22** even if the motor **60** is a synchronous motor with no control of its direction of rotation, that is a very simple and cheap motor.

In that case the direction of rotation of the motor is random.

Without the switch arrangement previously described, when the closure flap **54** would abutt against the intermediate gaskets **64** or any other abutment, the motor would start rotating in the opposite direction, immediately opening the valve **22** again.

Even electronic control systems with very quick response times could not prevent this partial reopening of the flap.

The arrangement previously described of the switches **70** and elastic member **66** is not only much more effective but also much simpler and less expensive than said electronic control systems, seeking to control a motor rigidly connected to the closure flap.

## Claims

1. Oven **(1)** for cooking foodstuffs comprising a cooking chamber **(2)** configured for containing foodstuff to be cooked, a ventilation duct **(21)** configured for taking external air into the cooking chamber **(2),** and a controlled ventilation valve **(22),** associated to or comprised in the ventilation duct **(21)** for adjusting the flow or air through the latter, wherein the controlled ventilation valve **(22)** comprises:
- a valve body **(50)** forming a valve duct **(52)** comprised in or fluidly connected to the ventilation duct **(21);** and
- a closure flap **(54)** configured for rotating around a predetermined rotation axis **(AR)** within said valve duct **(52),** so as to at least partially open and close said valve duct **(52)** and adjust the flow of air flowing in said ventilation duct **(21).**

2. Oven **(1)** according to claim **1,** wherein said controlled ventilation valve **(22)** is a butterfly valve.

3. Oven **(1)** according to claim **1** or **2,** further comprising a humidity control system configured for controlling the amount of humidity in said cooking chamber **(2),** said humidity control system comprising
- at least one humidity detector **(698)** configured for detecting the amount of humidity in said cooking chamber **(2)** when the oven **(1)** operates;
- a logic unit **(700)** controlling the position of said closure flap **(54)** based on the detections of said at least one humidity detector.

4. Oven **(1)** according to one or more preceding claims, wherein said valve body **(50)** comprises at least two valve body parts **(500),** fixed one another with said closure flap **(54)** pivotably positioned therebetween.

5. Oven **(1)** according to claim **4,** wherein said valve body **(50)** comprises two valve body parts **(500),** the shapes of which are identical or substantially identical one another.

6. Oven **(1)** according to claim **5,** wherein said two valve body parts **(500)** are arranged, when assembled one to another, substantially symmetrically or mirror-like one to another relative to an ideal reflection plane, said ideal reflection plane being arranged between said two valve body parts **(500).**

7. Oven **(1)** according to one or more preceding claims, wherein said controlled ventilation valve **(22)** comprises a motor **(60)** for driving said closure flap **(54),** causing said closure flap **(54)** to rotate so as to at least partially open and at least partially close said valve duct **(52).**

8. Oven **(1)** according to one or more of the preceding claims, wherein said controlled ventilation valve **(22)** comprises one or more intermediate gaskets **(64),** each of which forms a valve body portion **(640),** interposed between said at least two valve body parts **(500)** so as to enhance the sealing between said at least two valve body parts **(500).**

9. Oven **(1)** according to one or more of the preceding claims, wherein said controlled ventilation valve **(22)** comprises a flap body **(56)** forming said closure flap **(54)** and comprising at least one shaft portion **(58)** fixed to said valve body **(50)** so as to allow the flap **(54)** to rotate about said predetermined rotation axis **(AR).**

10. Oven **(1)** according at least to claim **8** and **9,** wherein each of said one or more intermediate gaskets **(64)** forms at least one gasket shaft portion **(642)** interposed between at least one of said valve body parts **(500)** and said shaft portion **(58)** of the flap body **(56).**

11. Oven **(1)** according at least to claim **8,** wherein each of said valve body portions **(640)** has substantially an overall arched shape.

12. Oven **(1)** according at least to claim **10,** wherein each of said gasket shaft portions **(642)** has substantially an overall arched shape.

13. Oven **(1)** according to one or more preceding claims, wherein said controlled ventilation valve **(22)** comprises:
- a motor **(60)** for driving the closure flap **(54),** causing it to rotate so as to at least partially open and at least partially close said valve duct **(52);** and
- a drive system comprising an elastic member **(66)** configured for being driven by said motor **(60)** and driving said closure flap **(54).**

14. Oven **(1)** according to claim **13,** wherein said controlled ventilation valve **(22)** is configured for causing said motor **(60)** to carry out an additional rotation after said closure flap **(54)** has closed said valve duct **(52)** by abutting or resting against said valve body **(50).**

15. Oven **(1)** according to one or more claims **7, 13, 14,** wherein said flap body **(56)** forms a cam profile **(58)** and said controlled ventilation valve **(22)** comprises at least one switch **(70)** controlling the activation and deactivation of said motor **(60)** and controlled by said cam profile **(58).**
